# EUROPEAN PATENT APPLICATION

(11) **EP 2 369 639 A2**
(43) Date of publication of application: **28.09.2011**
(21) Application number: 11159080.8
(22) Date of filing: 21.03.2011
(51) Int. Cl.: H01L 31/048

(54) **Connector box for solar photovoltaic modules**

(30) Priority: 25.03.2010 ES 201000289 U
(71) Applicant: ILB Helios Spain, S.A., 28816 Madrid (ES)
(72) Inventor: Bartolomé Tabladillo, Daniel, 28816, MADRID (ES); Bautista Ruadas, Emilio, 28816, MADRID (ES); Fornies Garcia, Eduardo, 28816, MADRID (ES); Llaneza Caruana, Benjamin, 28816, MADRID (ES); Serrano Martin, Javier, 28816, MADRID (ES); Simon Braojos, Miguel Angel, 28816, MADRID (ES); Simon Braojos, Javier, MADRID, 28816 (ES); Tojeiro Lorente, Marta, 28816, MADRID (ES)
(74) Representative: Isern-Jara, Nuria

(57) **Abstract**

A connector box for solar photovoltaic modules, that being especially conceived for assembly to the rear area of a solar photovoltaic module, and being of the type that is made up from a base housing that includes a plurality of cooling fins for the dissipation of the heat, on the inside of which there is a clamp for the holding of the input cables of said connector box, having a protector lid that is appropriately sealed, in such a way that parts that make up the box itself are manufactured from plastic materials that have high resistance to adverse weather conditions, likewise chemical products, said materials being provided with additives that provide resistance to ultra-violet radiation. It is provided means of heat dissipation, brought about in an electronic device or PCB (9) embedded on the inside of the base housing (2) by pressure, that provides the electrical connection through the connectors or connector cables (5) faced outwards so as to be connected to an external connection.

## Description

### Object of the invention

The present invention refers to a connector box made from a plastic material, that is specially designed to be assembled onto the rear part of a photovoltaic solar module, which is used to ensure the attachment, to provide a good and reliable electrical connection, likewise to protect the materials, electronic components and electrical connections of said photovoltaic solar module against external aggressions.

The aim of this invention is to provide a connector box with structural features that allow it to have appreciable advantages in terms of durability and reliability for the solar photovoltaic module to which it is fitted compared to other already existing devices with similar aims.

### Background to the Invention

At the present time, differing types of connector box are known for photovoltaic solar modules fitted with connection systems for the electrical components on the inside likewise a system for its closure that provides the necessary watertight seal, in those which it has been possible to observe just like in the said electrical connection system connection methods are used by means of mechanical contacts or the partial soldering of some of the electrical components to active parts that make up the solar module.

Normally, the electronic components and connections located on the inside of these connector boxes are positioned just behind some of the photovoltaic cells inserted between the differing layers of the photovoltaic solar module, because of this the electrical features of said cells are reduced as a result of the heat given off by the electronic components, normally protection diodes, during the periods of activation.

In addition, various fixing and sealing systems for the connector box to the rear of the solar module are known with the use of double sided adhesive tapes, silicone, polyurethanes or other types of hot or cold dispensed mono or bi-components polymers, however, these fixing systems have a series of disadvantages that are: The porosity of the material, the loss of the mechanical and di-electrical properties over time due to the reaction to ultra-violet radiation or chemical agents, likewise the lack of material flexibility to thermal stress to which the photovoltaic solar module is subjected.

The previously stated problems can bring about the loss of the watertight seal of the connector box, even a total or partial lifting off of the box and, therefore, the possibility of the entry of water or humidity into the interior which can give rise to the corrosion of the conductor parts or the communication of the electrical parts with opposite polarities; thus all of this being able to bring about the electrical breakdown or short-circuit of the photovoltaic solar module.

On attempting to solve this problem, the applicant itself is the owner of utility model U200701140, in which a connector box is described so as to be assembled on a photovoltaic module, which is made up from a base housing which includes a plurality of cooling fins for the dissipation of the heat, which at its core has a clamp to hold the cables to said connector box, also having a protector lid which is appropriately sealed, in such a way that the parts that make up the box itself are made from plastic materials that are highly resistant to adverse climatic conditions, likewise to chemical products, said materials being provided with additives that give resistance to ultra-violet radiation.

Although this box allows a certain amount of heat to be dissipated, it would desirable to have a box that would enable it to provide greater heat dissipation.

### Description of the invention

The connector box for solar photovoltaic modules that the invention proposes enables it to provide a greater dissipation of heat, which converts into a solar photovoltaic module with greater durability and ability.

In order to do this, the box of the invention starts out from the structure of the Utility Module U200701140, in which there is a base housing; connector cables or connectors that allow the conduction of the electrical energy generated by the photovoltaic module to the outside; a piece that has the task of a clamp for the holding of these connector cables by pressure and which is gripped on the cover; and a connector box protector lid, with the peculiarity that in addition it has an electronic device or PCB (hereinafter referred to as electronic device) embedded into the inside of the base housing.

Thus, the electronic device, together with the cooling fins of the box encourages the dissipation of any possible heat that has accumulated on the inside; the electronic device that is put onto a double sided resin base dissipates the heat generated by the diodes. During the normal working of the electronic device, the diodes installed in it increases its temperature, as an increase of temperature could bring about a deterioration of the diode. Consequently, it is necessary to evacuate the heat produced so as to maintain the working temperature.

More specifically, the electronic device has been designed so that there is a greater heat dissipation in the diodes and parts of same with greater heat generation.

According to another of the features of the invention, to encourage the exchange of heat from the electronic device with the outside, the height of the lid has been reduced in regard to the electronic device, thus reducing the contact surface area that there is with the diodes and the electronic device with the lid. In the same way, to improve this heat exchange said volume is filled with a thermo-conductor dielectric gel. Said thermo-conductor material is in turn an electrical insulator, and provides all of the active parts covered by same with an additional electrical insulation to that provided by the connector box, improving the thermal conductivity and insulating the active parts.

The material used for the manufacture of the parts of this connector box will be, just the same as in utility model U200701140, a polymer material, highly resistant to adverse weather conditions, a great diversity of chemical products and that in addition is fitted with a series of additives to guarantee its resistance to ultra-violet radiation and flames.

Just the same as in the case of the repeatedly quoted utility model, there are the connector cables connected to the base housing of the connector box that are provided with a small sized O-ring seal that guarantees the water-tightness of the inside of the base housing through small openings in same. The connector cables are provided with quick connector terminals with a safe block system and an IP67 protection level for the conductor parts. In a more specific manner there are two of these cables, one with a female termination and positive polarity and the other with a male termination and negative polarity. The cable used is double insulated with solar grade covering resistant to ultra-violet radiation and differing chemical substances, likewise resistant to abrasion and deterioration. A tin plated copper terminal is soldered to the free end of the cables that has a large size and section or another similar conductor material, with a circular through opening for the passage of the screw through it, to be explained latter on.

Electrical connections are made on the inside of the box that allow the energy generated by the solar module to be conducted to the outside by means of the two connector cables of differing polarity as stated in the previous paragraph. These connections are made from the reduced length laminated electronic device that is embedded on the inside of the solar photovoltaic module, through an internal window placed on the base of the connector box that goes to the electronic device located on the inside of the connector box, in which the mentioned large section terminals are assembled and fixed to the electronic device and to the connector box, helped by a stainless steel screw for the fixing. Each one of these terminals are crimped and soldered to one of the two cables of the solar module, as the absence of any of the soldered unions from the beginning would bring about the failure to conduct the energy generated by the solar module to the outside.

According to another of the features of the invention, on the inside of the solar photovoltaic panel a reduced length laminated electronic device is assembled. This is made up of tracks of conductor material made in sheets of copper, laminated onto a non-conductor substrate and with circular shaped perforations so as to have conductivity on both sides of the device. This surface has areas that are not soldered and which are covered with a polymer that is resistant to the solder, which prevents short circuits between the tracks that are close. The areas set for soldering are metalized for the connection of the ends of the strips of cells that are soldered during the inter-connection soldering process. This piece is a means for electrically connecting the ends of the solar cells that make up each one of the strips of cells or electronic components, which in their entirety are called the matrix, and which are attached by means of solder to the rear base of the reduced length laminated electronic device. The assembly used for the manufacture of the reduced length laminated electronic device is a substrate that is fire resistant and is highly resistant to adverse weather conditions, which also guarantees its resistance to ultra-violet radiation. The flow of the current that circulates through the reduced length laminated electronic device, comes from the inside of the panel to the connector box by means of large sized tin plated copper connector strips that are soldered at one end during the inter-connection soldering process, originating from the reduced length laminated electronic device, that are joined at the free end to the electronic device embedded on the inside of the base housing by means of soldering.

By preference, the base housing will be provided with an internal window in which an electronic device is located and which has the free ends of the large sized tin plated connector strips of the reduced length laminated electronic device joined, which will be located as close as possible to the base of the carcass. The physical and electrical features of the electronic device are similar to those of the reduced length laminated electronic device, this being of a smaller size, whilst one of the surfaces has protection diodes fitted.

Likewise, the metalized squared areas in the electronic device are mechanically and electrically connected to a large size tin plated copper terminal being fitted in the connector box by means of a fixing with a constant torque screw, likewise by soldering, so as to make the fixing of conductor materials easier. This soldering is carried out away from the mechanical fixing area for the purpose of not rendering the mechanical contact useless. In this way a good electrical and mechanical connection of the electrical connections is guaranteed between the flat tin plated copper strips that connect to the inner circuit of the photovoltaic solar module to the large section terminals located on the inside of the connector box, which in turn form a part of the connector cables that transfer the energy generated by the module to the outside. This connection system guarantees the durability of the photovoltaic solar module.

In a similar manner as occurred in the utility model U200701140, on the inside of the connector box a piece is assembled in which the material used for the manufacture of the piece has similar features to those of the connector box, this has the job of being used as a clamp for the fixing of the connector cables by pressure and grip onto the cover by means of tightening screws, thus eliminating the possibility of tension concerned with the terminal connection assembled onto the end of each cable that is in the inside of the connector box, whilst the area on the inside of the connector box is filled with a transparent dielectric and thermo conductor gel for protection against corrosion of the connections on the inside of the connector box, it is non-corrosive, that vulcanises at room temperature to a flexible rubber state, that prevents damage to the electrical and electronic components resulting from impacts, vibration or fatigue; it has good chemical stability and resistance to ultra-violet radiation, optimum dielectric properties, it is flame resistant and, in addition it is a thermo-conductive material that helps to dissipate the heat generated on the inside of the connector box.

Said connector box is positioned on the rear part of the solar photo-voltaic module, in such a way that its base remains elevated compared to the rear part of the module, with thermal insulating properties and the protection of the module against rear non-fire resistant sheets that can cause overheating and even burns due to the heat coming from the diodes on the inside of the connector box, which in adverse conditions or mal function can cause the solar photovoltaic module to catch fire.

Just the same as in the case of the repeatedly stated utility model, by way of a fixing of the connector box to the rear of the solar module, a piece of double sided tape is applied to differing areas, likewise the periphery of the base of the carcass, in parallel using a mono-component silicone which vulcanises quickly at room temperature, with good adhesive properties to metals and polymers, with a flexible and non-corrosive nature, resistant to adverse weather conditions at a wide range of temperatures, to ultra-violet radiation and chemical agents, with the purpose of sealing against the possible entry of water, humidity or other external agents.

Finally it must be stated that the protector lid of the connector box made with the same material as the clamp and the connector box is fitted with a silicone 'o'-ring seal that guarantees the water tightness on the inside with a closure system by means of pressure with screws from the outside of the seal.

### Description of the drawings

In order to complement the description that is being made and for the purpose of helping to give a better understanding of the features of the invention, according to a preferred example of a practical embodiment of same, said description is accompanied by a set of drawings as an integral part in which the following has been represented by way of illustration but without being by way of limitation:
Figure 1. Shows a front plan view of a connector box with a lid carried out according to the aim of this present invention.
Figures 2a and 2b. Show front and side perspective view of the connector box without its lid.

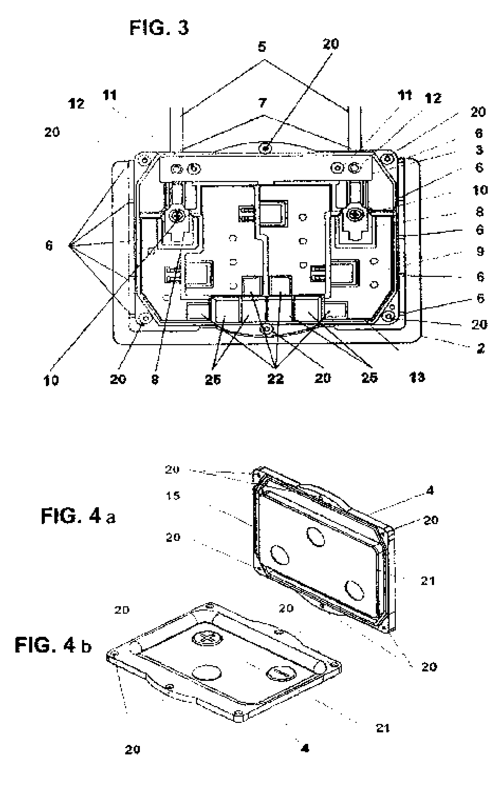

Figure 3. Shows a front plan view of the connector box without the lid, but with connector cables, clamp and the electronic device or PCB housed on the inside.
Figures 4a and 4b. Show respective front and rear isometric views in perspective of the protector lid of the connector box.
Figure 5. Shows a rear plan view of the connector box.
Figure 6. Shows an isometric view in perspective of the connector box without the lid and on the reduced length laminated electronic device that is connected to the solar module.
Figure 7. Shows, finally, the section of an isometric perspective view of the rear part of a photovoltaic solar module where the connector box is assembled.

### Preferred embodiment of the invention

In view of the figures quoted above, it can be seen how the connector box (1) that the invention proposes is essentially made up from a base housing (2) and clamp (3) that is complemented with a small sized O-ring seal (24), for the fixing of the cables to the connector box (1), a protector lid (4) for the connector box (1) and connectors or connector cables (5) going to the outside that can be joined up, as and how shown in the figures, all of them made from plastic materials that have high resistance to adverse weather conditions, a wide variety of chemical products and, in addition provided with a series of additives that guarantee their resistance to ultra-violet radiation and fire.

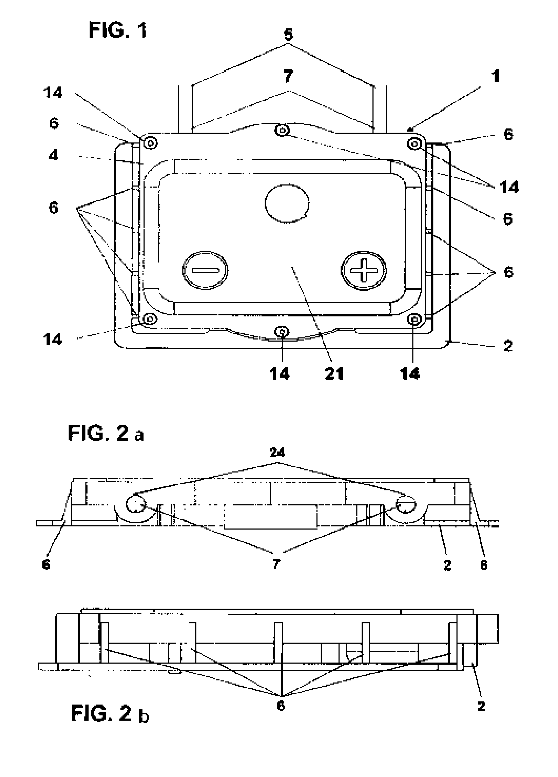

As can be seen in figure 1, the base housing (2) has an appreciably rectangular shape, which has on the external side walls thermal cooling fins (6) that encourage the dissipation of the possible heat build up on the inside of the connector box (1) against a possible defect of the electronic components on the inside of the connector box (1).

However, the invention focuses one of its features on the fact that, an electronic device or PCB (9) is embedded on the inside of the base housing (2) by means of pressure.

The connectors or connection cables (5), with an appropriate length and section that correspond to the design of the photovoltaic solar module, pass through two circular openings (7) made in the frontal widest face of the connector box (1). These connector (5) are fitted with a quick contact connector terminal with a safe locking system and IP67 protection level for the conductor parts at the end that goes to the outside of the connector box. At the other end of the connectors (5), this means, the end that is located on the inside of the connector box (1), a large section, tin plated copper terminal that has a screw hole on its blade is joined by means of a crimping and soldering process. This terminal (8) is supported on the electronic device or PCB (9) that is embedded in the base housing (2) by means of a screw (10) that is screwed in a safe manner onto the terminals (8) of the base housing (2) of the connector box (1).

Once having introduced the connectors (5) through two circular openings (7) made in the widest side of the connector box (1) and the small sized seals (24) the connectors (5) are assembled and fixed to the terminals (8) that are located on the inside of the connector box (1). Next, a fourth piece that is used for fixing or clamping (3) of same (5) to the connector box (1) itself. This clamp (3) is fixed to the base housing (2) of the connector box (1) by means of two screws (11). In the clamp section (3) that is assembled onto the connectors (5) there are cavities (12) that surround same, and which have and opening from the outside with a nozzle shape. These cavities (12) are sealed with a transparent dielectric gel and thermo conductor neutral quick curing bi-component silicone that has very good dielectric and mechanical features, in so far as flexibility, resistance to a wide temperature range, ultra-violet radiation, fire, etc. In this way the entry of external agents into the inside of the box (1) is prevented through the openings (7) made onto the front face wall.

The inside area of the connector box (1), where the electronic device or PCB (9) embedded on the inside of the base housing (2) can be found, is filled with the previously stated transparent dielectric gel and thermo conductor neutral quick curing bi-component silicone, which is introduced so as to protect said connections and components from oxidation and aggression from possible external agents.

The connector box (1) is closed on the upper side with a protector lid (4), and six screws (14) housed in openings (20) in the base (2) of the connector box (1) and the protector lid (4). On the lower part of the protector lid (4), through a channel, a silicone O-ring (15) is fitted that provides suitable water tightness to the connector box assembly (1) and the protector lid (4), when said protector lid (4) is closed onto the connector box (1) by means of the tightening of the screws (14) that remain on the outside of the closure provided by the O-ring (15) and preventing both parts from becoming detached. In this way the protector lid (4) is joined to the connector box (1).

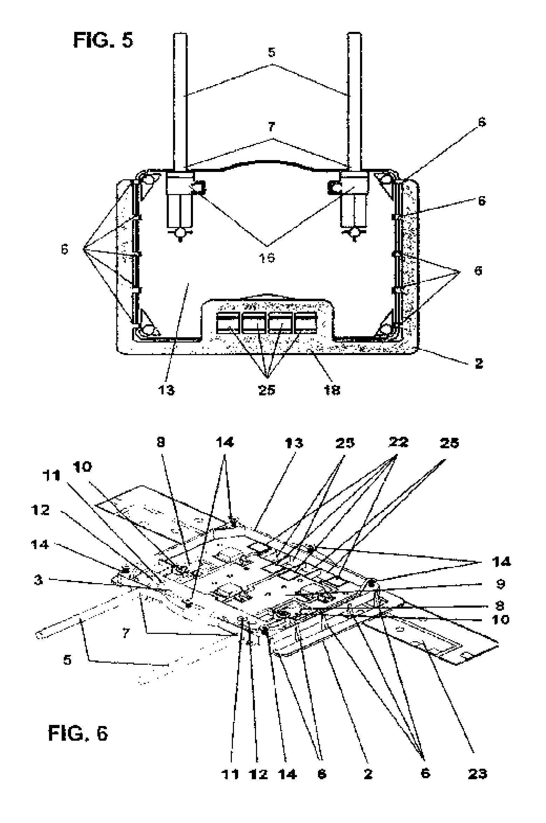

At the rear of the base housing (2) of the connector box (1) double sided adhesives (16) are fixed on, as and how shown with greater clarity in figure 5, that allow the connector box (1) to be fixed to the rear of the photovoltaic solar module (17) in an immediate manner so that it can be handled while the mono-component silicone seal strip hardens that is applied in a uniform manner to the rough periphery (18) of the rear face of the base housing (2) so as to fix the box (1) to the photovoltaic solar module. In the same way, the risk of detachment or movement of the connector box (1) is prevented and the need for intermediate storage times during the photovoltaic solar module manufacturing process.

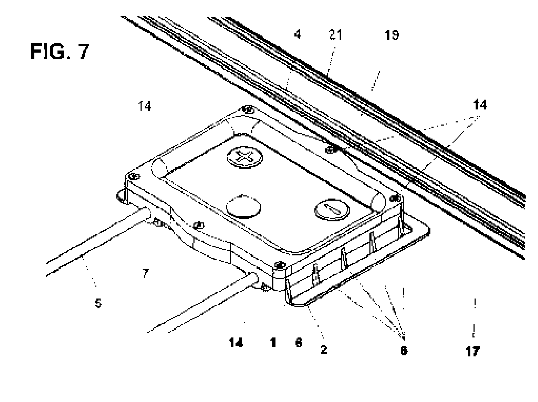

The disclosed connector box (1) is located on the rear and upper part of the solar photovoltaic module, close to the upper aluminium frame (19), visible in figure 7, in which the reduced length laminated electronic device (23) or one of greater size depending on the product manufactured to be embedded, which protects the solar module and, is away from the matrix of photovoltaic cells, that are attached and soldered in outlined areas (22) on the electronic device or PCB (9) embedded on the inside of the base housing by means of connections that have previously been soldered to the reduced length laminated electronic device (23).

## Claims

1. A connector box for solar photovoltaic modules, that being especially conceived for assembly to the rear area of a solar photovoltaic module, and being of the type that is made up from a base housing that includes a plurality of cooling fins for the dissipation of the heat, on the inside of which there is a clamp for the holding of the input cables of said connector box, having a protector lid that is appropriately sealed, in such a way that parts that make up the box itself are manufactured from plastic materials that have high resistance to adverse weather conditions, likewise chemical products, said materials being provided with additives that provide resistance to ultra-violet radiation, **characterised in that** there is the additional incorporation of means of heat dissipation, brought about in an electronic device or PCB (9) embedded on the inside of the base housing (2) by pressure, that provides the electrical connection through the connectors or connector cables (5) faced outwards so as to be connected to an external connection.

2. A connector box for solar photovoltaic modules, according to claim 1, **characterised in that** the connector cables (5) are pressed through a small sized O-ring (24), in addition they are assembled internally to the connector box (1) by means of a fixing clamp (3) and screws (11).

3. A connector box for solar photovoltaic modules, according to claim 1, **characterised in that** the connector cables (5) are fixed on the inside of the connector box (1) through a terminal conductor (8) that is crimped and soldered to the free end of the connector cable (5), arranging it so that said terminal (8) has a circular opening at the end of its blade for the passage of the screw (10) and, which is assembled onto the electronic device or PCB (9) arranged in an inner window (13) of the base housing (2).

4. A connector box for solar photovoltaic modules, according to claim 1 is **characterised in that** under the base housing (2) a reduced length laminated electronic device (23) is fitted which has the electronic components and the electrical connections, in addition strips of tin plated copper that define the reduced length electronic device (23) which are attached to the electronic device or PCB (9) located on the inside of the base housing (2) at the free end coming from same, arranged through machined openings (25) in the base housing (2), so as to make the join in the stated areas (22) or failing this in a mechanical and electrical manner to the terminals (8) located on the base housing (2) by means of a fixing screw (10) with a constant torque, likewise by soldering.

5. A connector box for solar photovoltaic modules, according to claim 1, **characterised in that** the protector lid (4) has a central depression (21) that is joined to the base housing (2) by means of fixing screws (14).
